# EUROPEAN PATENT APPLICATION

(11) **EP 4 224 982 A1**
(43) Date of publication of application: **09.08.2023**
(21) Application number: 21893781.1
(22) Date of filing: 08.11.2021
(51) Int. Cl.: H04W 76/15, H04W 48/08

(54) **COMMUNICATION METHOD AND COMMUNICATION DEVICE IN WIRELESS LOCAL AREA NETWORK**

(30) Priority: 20.11.2020 CN 202011311795
(71) Applicant: Huawei Technologies Co., Ltd., Shenzhen, Guangdong 518129 (CN)
(72) Inventor: DING, Baokun, Shenzhen, Guangdong 518129 (CN); WANG, Yungui, Shenzhen, Guangdong 518129 (CN); MAO, Yiwei, Shenzhen, Guangdong 518129 (CN); ZHANG, Shuaishuai, Shenzhen, Guangdong 518129 (CN)
(74) Representative: Isarpatent
(86) International application number: PCT/CN2021/129302
(87) International publication number: WO 2022/105634

(57) **Abstract**

A communication method in a wireless local area network and a communication device are disclosed. The method includes: A first multi-link device sends an indication to a second multi-link device through one or more links including a first link, so that the second multi-link device performs, at a start time point in the indication, an operation related to a second link corresponding to an identifier in the indication, to avoid affecting execution of a low-latency service when a link is unavailable, reduce a latency of the low-latency service, and improve reliability.

## Description

This application claims priority to Chinese Patent Application No. 202011311795.X, filed with the China National Intellectual Property Administration on November 20, 2020 and entitled "COMMUNICATION METHOD IN WIRELESS LOCAL AREA NETWORK AND COMMUNICATION DEVICE", which is incorporated herein by reference in its entirety.

### TECHNICAL FIELD

This application relates to the field of communication technologies, and in particular, to a communication method in a wireless local area network and a communication device.

### BACKGROUND

With development of wireless local area network (wireless local area network, WLAN) technologies, increasingly more wireless devices support multi-link communication. That a wireless device supports multi-link communication means that the wireless device supports simultaneous communication on a plurality of bands, or simultaneous communication on different channels of a same band. The wireless device that supports multi-link communication is usually referred to as a multi-link device (multi-link device, MLD). The multi-link device includes a plurality of stations (stations, STAs). Currently, multi-link devices in a WLAN are classified into two types: an access point (access point, AP) multi-link device (namely, an AP MLD) and a non-access point (non-AP) multi-link device (namely, a non-AP MLD). A STA in the access point multi-link device is an AP. A STA in the non-access point multi-link device is a non-AP STA. One or more links may be established between the non-access point multi-link device and the access point multi-link device, and each link is connected to one non-AP STA in the non-access point multi-link device and one AP in the access point multi-link device. There is an association relationship between a non-AP STA and an AP at two ends of a link. In 802.11ax, an AP performs an overlapping basic service set (overlapping basic service set, OBSS) scanning operation, to scan a channel of a specific set to discover a neighboring AP.

A quiet element (Quiet Element) may require that no frame interaction occurs on a current channel within a specific time interval, to ensure that no interference from another STA in a basic service set (basic service set, BSS) occurs during channel measurement.

When an operation such as OBSS scanning is performed on a link of the AP MLD, the current link is unavailable for a period of time, and effective data transmission can be performed on a low-latency service on the link only after the OBSS scanning is completed. As a result, a latency of the low-latency service is increased.

### SUMMARY

This application provides a communication method in a wireless local area network and a communication device, to reduce a latency of a low-latency service.

According to a first aspect, a communication method in a wireless local area network is provided. The method includes: A first multi-link device sends an indication to a second multi-link device through one or more links including a first link, where the indication includes a start time point and an identifier, the indication indicates the second multi-link device to perform an operation related to a second link at the start time point, and the identifier is an identifier of the second link or an identifier of a band that the second link is on.

In this aspect, the first multi-link device sends a first frame to the second multi-link device through the first link, where the first frame may carry the foregoing indication. The indication includes the start time point and the identifier. The indication may indicate the second multi-link device to perform the operation related to the second link when the start time point is reached. The related operation may be a switch operation, an activation operation, or an avoidance operation, and data exchange is performed on a switched link or an activated link. The identifier may be the identifier indicating the second link or the identifier of the band that the second link is on, so that the second multi-link device performs the operation related to the second link when the start time point is reached, which avoids time out of a low-latency service caused because the link is unavailable, and can reduce a latency of the low-latency service.

In a possible implementation, the indication further includes a reason code, and the reason code indicates the second multi-link device to use the second link or avoid the second link at the start time point based on the reason code.

In this possible implementation, the first multi-link device may further indicate, through the reason code in the indication, the second multi-link device to use the second link or avoid the second link at the start time point based on the reason code, to improve feasibility of the solution.

In a possible implementation, the indication further includes duration, and the duration indicates duration for which the second multi-link device continuously performs the operation related to the second link.

In this possible implementation, the first multi-link device may further indicate, through the duration in the indication, the duration for which the second multi-link device performs the operation related to the second link, to improve flexibility of multi-link communication.

According to a second aspect, a communication method in a wireless local area network is provided. The method is applied to a second multi-link device that communicates with a first multi-link device. The method includes: The second multi-link device receives, an indication from the first multi-link device through one or more links including a first link, where the indication includes a start time point and an identifier; and the second multi-link device performs an operation related to a second link at the start time point based on the indication, where the identifier is an identifier of the second link or an identifier of a band that the second link is on.

In this aspect, the second multi-link device receives a first frame from the first multi-link device, where the first frame may carry the indication. The indication includes the start time point and the identifier. The indication may indicate the second multi-link device to perform the operation related to the second link when the start time point is reached. The related operation may be a switch operation, an activation operation, or an avoidance operation, and data exchange is performed on a switched link or an activated link. The identifier may be the identifier indicating the second link or the identifier of the band that the second link is on, so that the second multi-link device performs the operation related to the second link corresponding to the identifier in the indication at the start time point based on the indication, which can avoid time out of a low-latency service caused because the link is unavailable can be avoided, and can reduce a latency of the low-latency service.

In a possible implementation, the indication further includes a reason code, and the reason code indicates to use the second link or avoid the second link at the start time point based on the reason code.

In this possible implementation, the second multi-link device may determine, based on the reason code in the indication, whether to use the second link corresponding to the identifier or avoid the second link corresponding to the identifier, to improve feasibility of the solution.

In a possible implementation, the step in which the second multi-link device performs an operation related to a second link at the start time point based on the indication includes: The second multi-link device changes an operating band of a radio frequency circuit at the start time point if the reason code indicates the second multi-link device to avoid the second link and the second multi-link device is a single radio frequency non-access point multi-link device.

In this possible implementation, the second multi-link device is the single frequency non-access point multi-link device, and can perform data exchange with the first multi-link device only through one band. The second multi-link device may avoid, based on indicating by the reason code, the second link indicated by the identifier to switch to another band, to improve feasibility of the solution.

In a possible implementation, the indication further includes duration, and the duration indicates duration for continuously performing the operation related to the second link.

In this possible implementation, the second multi-link device may further limit, based on the duration in the indication, the duration for which the second multi-link device performs the operation related to the second link, to improve flexibility of multi-link communication.

In a possible implementation, the second multi-link device may be a non-access point multi-link device that does not have a capability of simultaneously receiving and sending data on different links respectively. To be specific, the second multi-link device cannot receive downlink data on another link during uplink transmission, and the second multi-link device may receive the foregoing indication on one or more links, to improve reliability of the solution.

According to a third aspect, a communication device is provided, including: a sending unit, configured to send an indication to a second multi-link device through one or more links including a first link, where the indication includes a start time point and an identifier, the indication indicates the second multi-link device to perform an operation related to a second link at the start time point, and the identifier is an identifier of the second link or an identifier of a band that the second link is on.

The communication device is configured to perform the method in the first aspect or any implementation of the first aspect.

According to a fourth aspect, a communication device is provided, including: a receiving unit, configured to receive an indication from a first multi-link device through one or more links including a first link, where the indication includes a start time point and an identifier; and a processing unit, configured to perform an operation related to a second link at the start time point based on the indication, where the identifier is an identifier of the second link or an identifier of a band that the second link is on.

The communication device is configured to perform the method in the second aspect or any implementation of the second aspect.

According to a fifth aspect, a computer device is provided, including a processor, a memory, and a communication interface. The processor is configured to execute instructions stored in the memory, to enable a communication device to perform the method provided in the first aspect or any one of the optional manners of the first aspect. The communication interface is configured to receive or send an indication. For specific details of the communication device provided in the fifth aspect, refer to the first aspect or any one of the optional manners of the first aspect. Details are not described herein again.

According to a sixth aspect, a computer device is provided, including a processor, a memory, and a communication interface. The processor is configured to execute instructions stored in the memory, to enable a communication device to perform the method provided in the second aspect or any one of the optional manners of the second aspect. The communication interface is configured to receive or send an indication. For specific details of the communication device provided in the sixth aspect, refer to the second aspect or any one of the optional manners of the second aspect. Details are not described herein again.

According to a seventh aspect, a computer-readable storage medium is provided. The computer-readable storage medium stores a program. When a computer executes the program, the method provided in the first aspect or any one of the optional manners of the first aspect is performed.

According to an eighth aspect, a computer-readable storage medium is provided. The computer-readable storage medium stores a program. When a computer executes the program, the method provided in the second aspect or any one of the optional manners of the second aspect is performed.

According to a ninth aspect, a computer-readable storage medium is provided. The computer-readable storage medium stores a program. When a computer executes the program, the method provided in the third aspect or any one of the optional manners of the third aspect is performed.

According to a tenth aspect, a computer program product is provided. When the computer program product is executed on a computer, the computer performs the method provided in the first aspect or any one of the optional manners of the first aspect.

A first multi-link device sends an indication to a second multi-link device, so that the second multi-link device performs, at a start time point in the indication, an operation related to a second link corresponding to an identifier in the indication, so that the second multi-link device uses or avoids the second link to perform data exchange of a low-latency service with the first multi-link device, to execute the low-latency service in time, and reduce a latency of the low-latency service.

### BRIEF DESCRIPTION OF DRAWINGS

FIG. 1 is a schematic diagram of a system architecture of multi-link communication according to an embodiment of this application;
FIG. 2 shows an embodiment of a communication method in a wireless local area network according to embodiments of this application;
FIG. 3 is a schematic diagram of data exchange according to an embodiment of this application;
FIG. 4 is another schematic diagram of data exchange according to an embodiment of this application;
FIG. 5 shows another embodiment of a communication method in a wireless local area network according to embodiments of this application;
FIG. 6 is another schematic diagram of data exchange according to an embodiment of this application;
FIG. 7 shows another embodiment of a communication method in a wireless local area network according to embodiments of this application;
FIG. 8 is another schematic diagram of data exchange according to an embodiment of this application;
FIG. 9 is a schematic diagram of a structure of a communication device according to an embodiment of this application;
FIG. 10 is a schematic diagram of a structure of a communication device according to an embodiment of this application;
FIG. 11 is a schematic diagram of a structure of a computer device according to an embodiment of this application; and
FIG. 12 is a schematic diagram of a structure of a computer device according to an embodiment of this application.

### DESCRIPTION OF EMBODIMENTS

Embodiments of this application provide a communication method in a wireless local area network and a communication device, to reduce a latency of a low-latency service.

The following describes embodiments of this application with reference to accompanying drawings. It is clear that the described embodiments are merely some but not all of embodiments of this application. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way is interchangeable in proper circumstances so that embodiments of the present invention described herein can be implemented in orders other than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person of ordinary skill in the art should understand that the present invention may also be implemented without the specific details. In some embodiments, methods, means, components, and circuits well known by a person skilled in the art are not described in detail, so that a main purpose of the present invention is highlighted.

That a wireless device supports multi-link communication means that the wireless device supports simultaneous communication on a plurality of bands, or simultaneous communication on different channels of a same band. The wireless device that supports multi-link communication is usually referred to as a multi-link device (multi-link device, MLD). The multi-link device includes a plurality of stations (stations, STAs). Multi-link devices in a wireless local area network (wireless local area network, WLAN) are classified into two types: an access point (access point, AP) multi-link device (namely, an AP MLD) and a non-access point (non-AP) multi-link device (namely, a non-AP MLD). A STA in the access point multi-link device is an AP. A STA in the non-access point multi-link device is a non-AP STA. One or more links may be established between the non-access point multi-link device and the access point multi-link device, and each link is connected to one non-AP STA in the non-access point multi-link device and one AP in the access point multi-link device. There is an association relationship between a non-AP STA and an AP at two ends of a link.

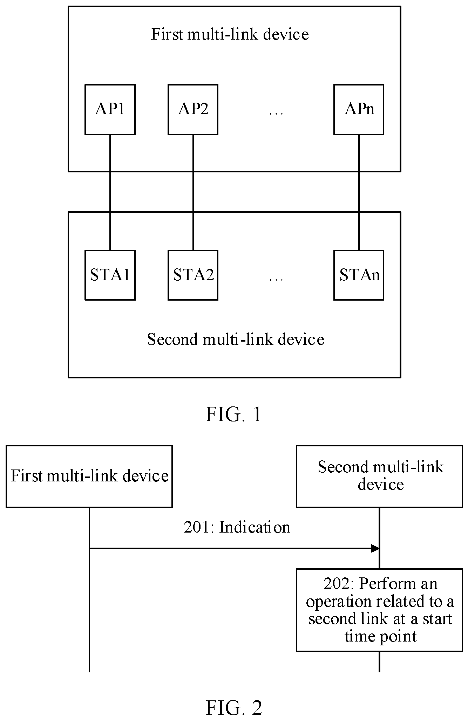

The following describes an example of an application scenario of this application. FIG. 1 shows a system architecture of multi-link communication. The system architecture includes at least one first multi-link device and at least one second multi-link device. The first multi-link device is an access point multi-link device, and the access point multi-link device includes a plurality of APs, such as an AP 1, an AP2, ..., and an APn shown in the figure. The second multi-link device is a non-access point multi-link device, and the non-access point multi-link device includes a plurality of non-AP STAs, such as a STA1, a STA2, ..., and a STAn shown in the figure. One or more links may be established between the non-access point multi-link device and the access point multi-link device, and each link is connected to one non-AP STA in the non-access point multi-link device and one AP in the access point multi-link device. There is an association relationship between a non-AP STA and an AP at two ends of a link.

In 802.11ax, an AP performs an overlapping basic service set (overlapping basic service set, OBSS) scanning operation, to scan a channel of a specific set to discover a neighboring AP. By using an example of a STA with a very high throughput (very high throughput, VHT), minimum scanning duration for each channel that is required in a protocol defaults to 20 time units (time units, TUs) for passive scanning or 10 TUs for active scanning. During an OBSS scanning operation, each channel in a set is scanned at least once every 300 seconds by default, and default total scanning duration is at least 200 TUs (passive scanning) or 20 TUs (active scanning).

In product implementation, during OBSS scanning, scanning duration for each channel is generally set to 100 TUs, that is, about a target beacon transmission time (target beacon transmission time, TBTT), to ensure that a beacon (Beacon) frame of a neighboring AP can be heard at a high probability during this period.

A quiet element (Quiet Element) may require that no frame interaction occurs on a current channel within a specific time interval, to ensure that no interference from another STA in a basic service set (basic service set, BSS) occurs during channel measurement. A frame structure of the quiet element is shown in Table 1. An element identifier (Element ID) field indicates an identifier of the element; a length (Length) indicates a length of the element; a quiet count (Quiet Count) field indicates a quantity of TBTTs between a beacon interval (beacon interval) within which a next quiet interval (quiet interval) is and a current time point; a quiet period (Quiet Period) field indicates a quantity of beacon intervals between two quiet intervals; a quiet duration (Quiet Duration) field indicates duration of a quiet interval; and a quiet offset (Quiet Offset) field indicates an offset between a start time point of the quiet interval and a TBTT indicated in quiet count. The quiet element may be carried in a beacon frame and a probe response (Probe Response) frame.

**Table 1**

| | | | | | |
|---|---|---|---|---|---|
| Element ID | Length | Quiet count | Quiet period | Quiet duration | Quiet offset |

When an operation such as OBSS scanning is performed on a link of the AP MLD, the current link is unavailable for a period of time, and effective data transmission can be performed on a low-latency service on the link only after the OBSS scanning is completed. As a result, both a latency and a reliability requirement of the low-latency service cannot be ensured. To reduce the latency of the low-latency service, an embodiment of this application provides a communication method in a wireless local area network. The method includes: A first multi-link device sends an indication to a second multi-link device through one or more links including a first link, where the indication includes a start time point and an identifier, the indication indicates the second multi-link device to perform an operation related to a second link at the start time point, and the identifier is an identifier of the second link or an identifier of a band that the second link is on. The second multi-link device performs the operation related to the second link at the start time point based on the indication, where the identifier is the identifier of the second link or the identifier of the band that the second link is on. In this way, an appropriate link can be selected for the low-latency service when the start time point is reached, to avoid affecting execution of the low-latency service.

Based on the foregoing application scenario, the following describes the communication method in a wireless local area network provided in this embodiment of this application.

In this embodiment, data exchange between the first multi-link device and the second multi-link device is limited by a type of the second multi-link device. The second multi-link device is a non-access point device, and may be a single radio frequency non-access point multi-link device, or may be a non-access point multi-link device that does not have a capability of simultaneously receiving and sending data on different links respectively. The following separately provides description. The single radio frequency non-access point multi-link device is a non-access point device that supports a multi-link protocol but has only one radio frequency circuit that can switch a band.
1. The second multi-link device is the non-access point device.

Refer to FIG. 2. An embodiment of a communication method in a wireless local area network provided in embodiments of this application includes the following steps.

201: A first multi-link device sends an indication to a second multi-link device.

In this embodiment, the first multi-link device sends a first frame to the second multi-link device, where the first frame includes the foregoing indication. The first multi-link device may send the first frame only through a first link, or may send the first frame through a plurality of links including the first link. This is not specifically limited herein.

The indication includes a start time point and an identifier. The indication may indicate the second multi-link device to perform an operation related to a second link when the start time point is reached. The related operation may be a switch operation, an activation operation, or an avoidance operation, and data exchange is performed on a switched link or an activated link. The identifier may be an identifier indicating the second link or an identifier of a band that the second link is on.

The foregoing first frame may be a beacon frame or a data frame such as any other broadcast, multicast, or unicast frame that can carry a recommend element (Recommend Element). If the first frame is not a broadcast frame, the procedure further includes: The first multi-link device receives, on the second link, an acknowledgment character (acknowledgement character, ACK) frame of the second multi-link device for the first frame. The recommend element is the indication in this embodiment.

The recommend element may further include a reason code. For example, when OBSS scanning is planned to be performed on the first link at the start time point, the reason code may indicate the second multi-link device to avoid the second link indicated by the foregoing identifier when the start time point is reached (in this case, the first link and the second link are a same link). Optionally, the reason code may directly indicate the second multi-link device to wake or switch to another link other than the second link, or may indicate that an AP load on the second link is too high, to recommend the second multi-link device to perform load balance by waking or switching to another link other than the second link.

The recommend element may further include duration, and the duration may indicate duration for which the second multi-link device performs the operation related to the second link.

The recommend element may be shown in Table 2 or Table 3 below.

**Table 2**

| | | | | | |
|---|---|---|---|---|---|
| Element ID | Length | Target time | Duration | Band/Link ID | Reason |

The element identifier (Element ID) field indicates an identifier of the element. The length (Length) indicates a length of the element. The target time indicates the start time point, and may be specifically a timing synchronization function (timing synchronization function, TSF) timer (timer) or a partial (partial) TSF timer, or may be a set including a count field, a period field, and an offset field that are similar to those in a quiet element, as shown in Table 3. For example, the partial TSF timer uses TSF [10:25] with 16 bits in total to indicate 1 to 65535 TUs, where 0 indicates to immediately start. The duration indicates the duration, and may be measured in TUs, or may be a value based on a table (for example, values 0 to 15 respectively correspond to different time periods), or may be some special values, for example, 0 indicates infinite duration. The band or link (Band/Link) identifier (identifier, ID) may indicate a specific band, for example, 2.4G, 5G, or 6G, or may alternatively indicate a link ID newly defined in 802. 11be, which may be specifically represented as a triplet (an operational class (Operational Class), a channel (Channel), and a basic service set identifier (Basic Service Set ID, BSSID)). The reason indicates the reason code whose specific meaning may include OBSS scanning (Scanning) and channel switch (Switch).

**Table 3**

| | | | | | | |
|---|---|---|---|---|---|---|
| Element ID | Length | Count | Period | Offset | Duration | Band/Link ID |

202: The second multi-link device performs the operation related to the second link at the start time point based on the indication.

In this embodiment, when receiving the first frame from the first multi-link device, the second multi-link device may obtain the indication in the first frame, and perform the operation related to the second link corresponding to the identifier in the indication at the start time point based on the indication.

In an example, the reason code in the indication indicates the second multi-link device to use the second link at the start time point, and the second multi-link device may activate or switch to the second link, and perform data exchange with the first multi-link device through the second link. Optionally, exchanged data may be data of a low-latency service, or may be another service running on another link.

In another example, the reason code in the indication may indicate the second multi-link device to select a link other than the foregoing second link at the start time point, and the second multi-link device may activate or switch to the selected link for data exchange.

Optionally, the reason code may further include other fields, for example, load balance (Load Balance), wake the corresponding link only (Wake the Corresponding Link Only), occupied already (Occupied already), and link recommendation (Link Recommendation). The load balance may indicate that an AP load on the second link is too high and the load needs to be balanced. The wake the corresponding link only may indicate the second multi-link device to wake the second link, and the second multi-link device does not need to listen to the beacon frame at the second link at any moment. The occupied already may indicate that the second link corresponding to the identifier is unavailable, and the second multi-link device may select to wake or switch to another link. The link recommendation may refer to recommending the second multi-link device to use the second link corresponding to the identifier. Optionally, the second multi-link device may determine whether to use the second link.

In an example, at the foregoing start time point, the second multi-link device may alternatively use or avoid the second link only within the duration in the indication.

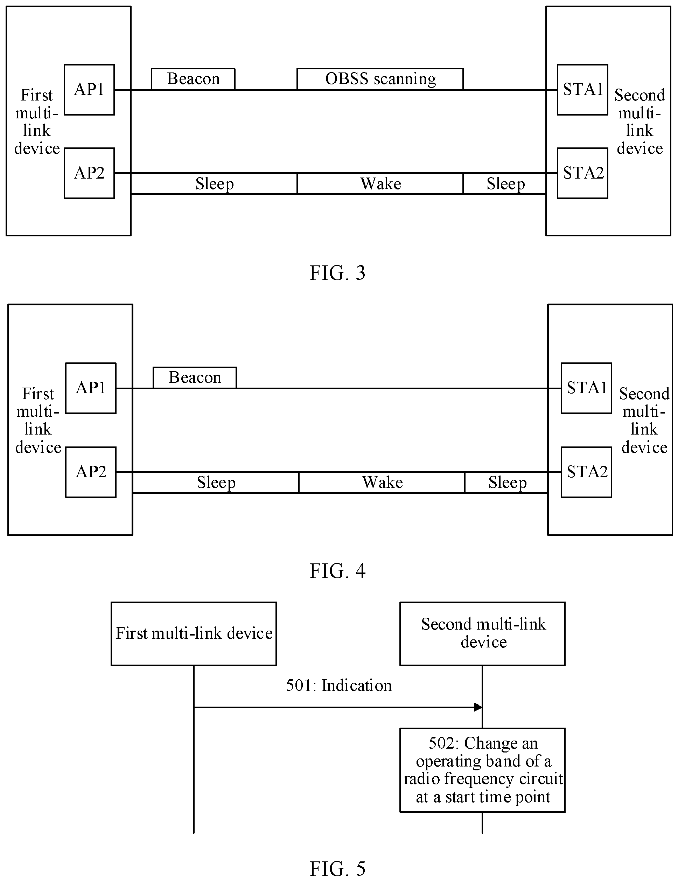

At a start time point when the first multi-link device performs a first operation and within duration for which the first multi-link device performs the first operation, the first multi-link device may perform the first operation on the second link, causing the second link to be unavailable, and the second multi-link device may wake another link to execute a low-latency service on the second link. The first operation may be OBSS scanning, channel switch, or another operation that causes the second link to be unavailable for a specific time. FIG. 3 is a schematic diagram of data exchange. An AP1 is connected to a STA1, and an AP2 is connected to a STA2. The first multi-link device sends a beacon frame to the second multi-link device through the AP1. If a recommend element in the beacon frame indicates that the second multi-link device knows that the first multi-link device plans to perform OBSS scanning at the foregoing start time point and within the duration, the recommend element indirectly indicates that the second multi-link device may avoid, at the start time point and within the duration, a link that the AP1 corresponding to the identifier is on, and select another link (for example, a sleeping link that the AP2 is on) for waking, to perform data exchange of a low-latency service with the first multi-link device. In this case, the first link and the second link are a same link.

When the first multi-link device does not perform the first operation, the first multi-link device may alternatively send the foregoing indication to the second multi-link device, to perform load balance and the like.

FIG. 4 is another schematic diagram of data exchange. An AP1 is connected to a STA1, and an AP2 is connected to a STA2. The first multi-link device sends a beacon frame to the second multi-link device through the AP1. A recommend element in the beacon frame directly recommends the second multi-link device to wake and use another link other than a link that the AP1 corresponding to the identifier is on at the foregoing start time point and within the duration.

The second link and the first link may be the same. The second link may alternatively be a link other than the first link.

In this embodiment, a first multi-link device sends an indication to a second multi-link device, so that the second multi-link device performs, at a start time point in the indication, an operation related to a second link corresponding to an identifier in the indication, so that the second multi-link device avoids or uses the second link to perform data exchange of a low-latency service with the first multi-link device, which can perform the data exchange of the low-latency service in time, and reduce a latency of the low-latency service.

2. The second multi-link device is the single-radio frequency non-access point multi-link device.

Refer to FIG. 5. Another embodiment of a communication method in a wireless local area network provided in embodiments of this application includes the following steps.

501: A first multi-link device sends an indication to a second multi-link device.

For step 501 in this embodiment, refer to related description of step 201 in the communication method in a wireless local area network shown in FIG. 2. Details are not described herein again.

502: The second multi-link device changes an operating band of a radio frequency circuit at a start time point if a reason code indicates the second multi-link device to avoid a second link and the second multi-link device is a single radio frequency non-access point multi-link device.

In this embodiment, the second multi-link device is the single radio frequency non-access point multi-link device, that is, data exchange can be performed between the second multi-link device and the first multi-link device only through one band. In this case, the second link corresponding to an identifier in the indication is a first link, and a reason code indicates the second multi-link device to switch a band. The second multi-link device changes the operating band of the radio frequency circuit at the start time point, that is, switches a band for data exchange to another band when a band that the second link is on is unavailable.

In an example, at the foregoing start time point, the second multi-link device may alternatively use the second link only within duration in the indication.

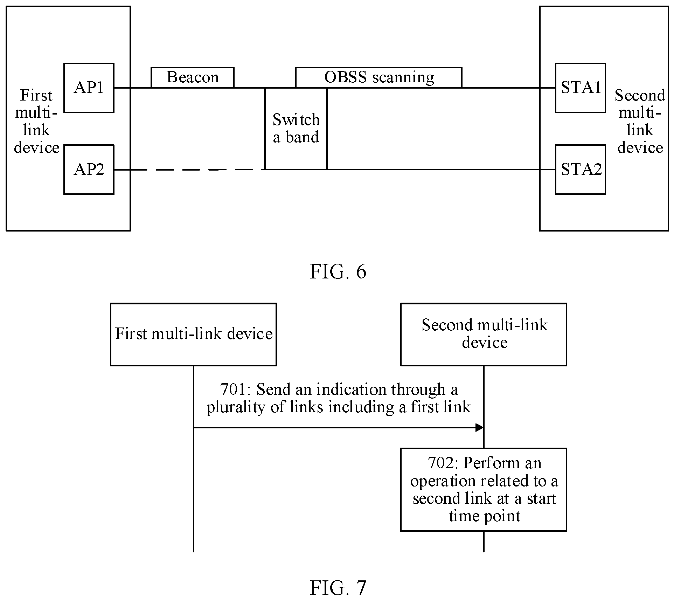

At a start time point when the first multi-link device performs a first operation and within duration for which the first multi-link device performs the first operation, the first multi-link device may perform the first operation on the second link, causing the second link to be unavailable. The first operation may be OBSS scanning, or another operation that causes the second link to be unavailable for a specific time. FIG. 6 is another schematic diagram of data exchange. An AP1 is connected to a STA1, and a link between an AP2 and a STA2 is represented by a dashed line (where the second multi-link device is the single radio frequency non-access point multi-link device, and the link may be a virtual link established in an association phase, or may be a potential link that is not established). The first multi-link device sends a beacon frame to the second multi-link device through the AP1. If a recommend element in the beacon frame indicates that the second multi-link device knows that the first multi-link device plans to perform OBSS scanning at the foregoing start time point and within the duration and the identifier indicates a band corresponding to the AP1, the second multi-link device may switch, at the start time point and within the duration, a band to a band other than the band that the AP1 is on, for example, a band that the AP2 is on shown in FIG. 6.

When the first operation is not performed, the first multi-link device may alternatively send the foregoing indication to the second multi-link device, for example, to wake a specified link. In this case, the second link corresponding to the identifier in the indication is a link recommended for use.

In this embodiment, a first multi-link device sends an indication to a second multi-link device, so that the second multi-link device performs, at a start time point in the indication, an operation related to a second link corresponding to an identifier in the indication, so that the second multi-link device uses or avoids the second link to perform data exchange of a low-latency service with the first multi-link device, which can improve reliability of the low-latency service.

3. The second multi-link device is the non-access point multi-link device that does not have the capability of simultaneously receiving and sending the data on different links respectively.

In this embodiment, the first multi-link device may send the indication to the second multi-link device through all links in use, which can reduce a possibility that the non-access point multi-link device that does not have the capability of simultaneously receiving and sending the data on different links respectively cannot receive the indication.

Refer to FIG. 7. Another embodiment of a communication method in a wireless local area network provided in embodiments of this application includes the following steps.

701: A first multi-link device sends an indication to a second multi-link device through a plurality of links including a first link.

In this embodiment, the first multi-link device may send the indication to the second multi-link device through a plurality of activated links connected to the second multi-link device. For a specific indication, refer to related description of step 201 in the communication method in a wireless local area network shown in FIG. 2. Details are not described herein again.

702: The second multi-link device performs an operation related to a second link at a start time point based on the indication.

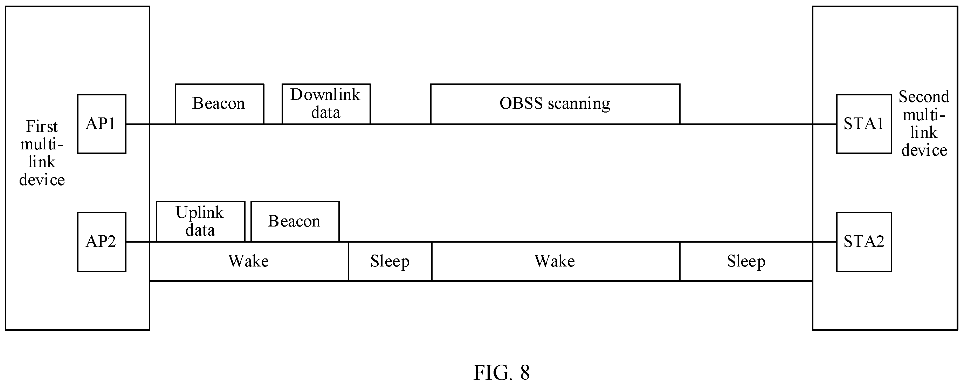

The second multi-link device is a non-access point multi-link device that does not have a capability of simultaneously receiving and sending data on different links respectively. To be specific, when the first multi-link device sends the indication to the second multi-link device on the plurality of links including the first link, the second multi-link device may receive the indication on only one of the links. FIG. 8 is another schematic diagram of data exchange. An AP1 is connected to a STA1, and an AP2 is connected to a STA2. The first multi-link device sends a beacon frame to the second multi-link device through the AP1 and the AP2. A recommend element in the beacon frame indicates that the second multi-link device knows that the first multi-link device plans to perform OBSS scanning at a start time point and within duration. When the AP1 sends a beacon frame, the STA2 sends uplink data. Due to a capability limitation of the second multi-link device, the second multi-link device cannot receive the beacon frame sent by the AP1. When the AP2 sends a beacon frame, the AP1 also sends downlink data. In this case, the STA2 may successfully receive the beacon frame sent by the AP2. The recommend element indirectly indicates that the second multi-link device may avoid the second link corresponding to an identifier at the start time point and within the duration. In this embodiment, the second link is a link that the AP1 is on. In this embodiment, when the AP1 performs OBSS scanning, the second multi-link device wakes a link that the STA2 is on to perform data transmission. When a first operation is not performed, the first multi-link device may alternatively send the foregoing indication to the second multi-link device, for example, to wake a specified link. In this case, the second link corresponding to the identifier in the indication is a link recommended for use.

For a specific operation related to the second link in this embodiment, refer to related description of step 202 in the communication method in a wireless local area network shown in FIG. 2. Details are not described herein again.

In this embodiment, a first multi-link device sends an indication to a second multi-link device, so that the second multi-link device performs, at a start time point in the indication, an operation related to a second link corresponding to an identifier in the indication, so that the second multi-link device uses or avoids the second link to perform data exchange of a low-latency service with the first multi-link device, which can perform the data exchange of the low-latency service in time, and reduce a latency of the low-latency service.

The foregoing describes the communication method in a wireless local area network. The following describes a communication device in an embodiment of this application with reference to the accompanying drawings.

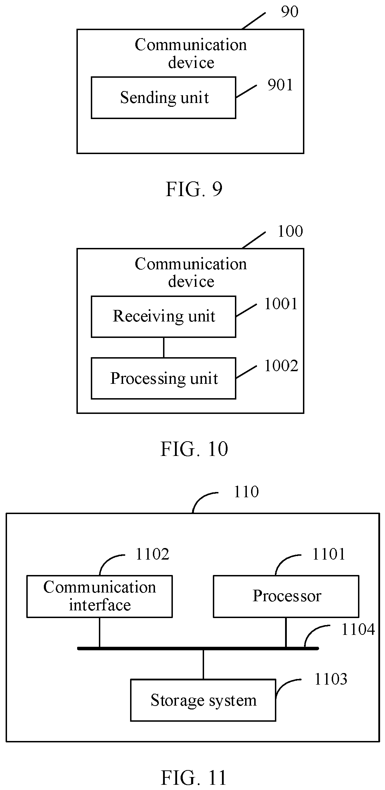

FIG. 9 is a schematic diagram of an embodiment of a communication device 90 according to an embodiment of this application.

As shown in FIG. 9, this embodiment of this application provides the communication device. The communication device includes:
a sending unit 901, configured to send an indication to a second multi-link device through one or more links including a first link, where the indication includes a start time point and an identifier, the indication indicates the second multi-link device to perform an operation related to a second link at the start time point, and the identifier is an identifier of the second link or an identifier of a band that the second link is on.

Optionally, the indication further includes a reason code, and the reason code indicates the second multi-link device to use the second link or avoid the second link at the start time point based on the reason code.

Optionally, the indication further includes duration, and the duration indicates duration for which the second multi-link device continuously performs the operation related to the second link.

In this embodiment, the communication device may perform operations performed by the first multi-link device in the embodiments shown in FIG. 2, FIG. 5, and FIG. 7. Details are not described herein again.

FIG. 10 is a schematic diagram of an embodiment of a communication device 100 according to an embodiment of this application.

As shown in FIG. 10, this embodiment of this application provides the communication device. The communication device includes:
a receiving unit 1001, configured to receive an indication from a first multi-link device through one or more links including a first link, where the indication includes a start time point and an identifier; and a processing unit 1002, configured to perform an operation related to a second link at the start time point based on the indication, where the identifier is an identifier of the second link or an identifier of a band that the second link is on.

Optionally, the indication further includes a reason code, and the reason code indicates to use the second link or avoid the second link at the start time point based on the reason code.

Optionally, the processing unit 1002 is further configured to: change an operating band of a radio frequency circuit at the start time point if the reason code indicates to avoid the second link and the communication device is a single radio frequency non-access point multi-link device.

Optionally, the indication further includes duration, and the duration indicates duration for continuously performing the operation related to the second link.

In this embodiment, the communication device may perform operations performed by the second multi-link device in the embodiments shown in FIG. 2, FIG. 5, and FIG. 7. Details are not described herein again.

FIG. 11 is a schematic diagram of a possible logical structure of a computer device 110 according to an embodiment of this application. The computer device 110 includes a processor 1101, a communication interface 1102, a storage system 1103, and a bus 1104. The processor 1101, the communication interface 1102, and the storage system 1103 are connected to each other through the bus 1104. In this embodiment of this application, the processor 1101 is configured to control and manage an action of the computer device 110. For example, the processor 1101 is configured to perform steps performed by a storage management apparatus in the method embodiments in FIG. 3 to FIG. 4. The communication interface 1102 is configured to support the computer device 110 in performing communication. The storage system 1103 is configured to store program code and data of the computer device 110.

The processor 1101 may be a central processing unit, a general-purpose processor, a digital signal processor, an application-specific integrated circuit, a field programmable gate array or another programmable logic device, a transistor logic device, a hardware component, or any combination thereof. The processor 1101 may implement or perform various examples of logic blocks, modules, and circuits described with reference to content disclosed in this application. The processor 1101 may alternatively be a combination, for example, a combination including one or more microprocessors or a combination of a digital signal processor and a microprocessor, for implementing a computing function. The bus 1104 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used to represent the bus in FIG. 11, but this does not mean that there is only one bus or only one type of bus.

The sending unit 901 in the communication device 90 is equivalent to the communication interface 1102 in the computer device 110.

The computer device 110 in this embodiment may correspond to the first multi-link device in the foregoing method embodiments. The communication interface 1102 in the computer device 110 may implement functions of the first multi-link device and/or various steps implemented by the first multi-link device in the foregoing method embodiments. For brevity, details are not described herein again.

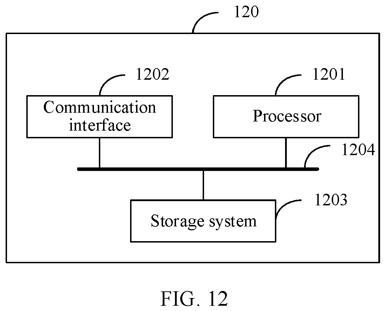

FIG. 12 is a schematic diagram of a possible logical structure of a computer device 120 according to an embodiment of this application. The computer device 120 includes a processor 1201, a communication interface 1202, a storage system 1203, and a bus 1204. The processor 1201, the communication interface 1202, and the storage system 1203 are connected to each other through the bus 1204. In this embodiment of this application, the processor 1201 is configured to control and manage an action of the computer device 120. For example, the processor 1201 is configured to perform steps performed by a processing apparatus in the method embodiments in FIG. 3 to FIG. 4. The communication interface 1202 is configured to support the computer device 120 in performing communication. The storage system 1203 is configured to store program code and data of the computer device 120.

The processor 1201 may be a central processing unit, a general-purpose processor, a digital signal processor, an application-specific integrated circuit, a field programmable gate array or another programmable logic device, a transistor logic device, a hardware component, or any combination thereof. The processor 1201 may implement or perform various examples of logic blocks, modules, and circuits described with reference to content disclosed in this application. The processor 1201 may alternatively be a combination, for example, a combination including one or more microprocessors or a combination of a digital signal processor and a microprocessor, for implementing a computing function. The bus 1204 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used to represent the bus in FIG. 12, but this does not mean that there is only one bus or only one type of bus.

The receiving unit 1001 in the communication device 100 is equivalent to the communication interface 1202 in the computer device 120, and the processing unit 1002 in the communication device 100 may be equivalent to the processor 1201.

The computer device 120 in this embodiment may correspond to the second multi-link device in the foregoing method embodiments. The processor 1201 and the communication interface 1202 in the computer device 120 may implement functions of the second multi-link device and/or various steps implemented by the second multi-link device in the foregoing method embodiments. For brevity, details are not described herein again.

In another embodiment of this application, a computer-readable storage medium is further provided. The computer-readable storage medium stores computer executable instructions. When a processor of a device executes the computer executable instructions, the device performs the steps of the communication method in a wireless local area network performed by the first multi-link device in FIG. 2, FIG. 5, and FIG. 7.

In another embodiment of this application, a computer-readable storage medium is further provided. The computer-readable storage medium stores computer executable instructions. When a processor of a device executes the computer executable instructions, the device performs the steps of the communication method in a wireless local area network performed by the second multi-link device in FIG. 2, FIG. 5, and FIG. 7.

In another embodiment of this application, a computer program product is further provided. The computer program product includes computer executable instructions, and the computer executable instructions are stored in a computer-readable storage medium. When a processor of a device executes the computer executable instructions, the device performs the steps of the communication method in a wireless local area network performed by the first multi-link device in FIG. 2, FIG. 5, and FIG. 7.

In another embodiment of this application, a computer program product is further provided. The computer program product includes computer executable instructions, and the computer executable instructions are stored in a computer-readable storage medium. When a processor of a device executes the computer executable instructions, the device performs the steps of the communication method in a wireless local area network performed by the second multi-link device in FIG. 2, FIG. 5, and FIG. 7.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it can be understood that the disclosed system, apparatus, and method may be implemented in other manners. For example, the described apparatus embodiments are only examples. For example, division of the units is only logical function division, and may be other division during actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, all of the technical solutions of this application or the part of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A communication method in a wireless local area network, wherein the method comprises:
sending, by a first multi-link device, an indication to a second multi-link device through one or more links comprising a first link, wherein the indication comprises a start time point and an identifier, the indication indicates the second multi-link device to perform an operation related to a second link at the start time point, and the identifier is an identifier of the second link or an identifier of a band that the second link is on.

2. The communication method in a wireless local area network according to claim 1, wherein the indication further comprises a reason code, and the reason code indicates the second multi-link device to use the second link or avoid the second link at the start time point based on the reason code.

3. The communication method in a wireless local area network according to claim 1 or 2, wherein the indication further comprises duration, and the duration indicates duration for which the second multi-link device continuously performs the operation related to the second link.

4. A communication method in a wireless local area network, wherein the method is applied to a second multi-link device that communicates with a first multi-link device, and the method comprises:
receiving, by the second multi-link device, an indication from the first multi-link device through one or more links comprising a first link, wherein the indication comprises a start time point and an identifier; and
performing, by the second multi-link device, an operation related to a second link at the start time point based on the indication, wherein the identifier is an identifier of the second link or an identifier of a band that the second link is on.

5. The communication method in a wireless local area network according to claim 4, wherein the indication further comprises a reason code, and the reason code indicates to use the second link or avoid the second link at the start time point based on the reason code.

6. The communication method in a wireless local area network according to claim 5, wherein the performing, by the second multi-link device, an operation related to a second link at the start time point based on the indication comprises:
changing, by the second multi-link device, an operating band of a radio frequency circuit at the start time point if the reason code indicates the second multi-link device to avoid the second link and the second multi-link device is a single radio frequency non-access point multi-link device.

7. The communication method in a wireless local area network according to any one of claims 4 to 6, wherein the indication further comprises duration, and the duration indicates duration for continuously performing the operation related to the second link.

8. A communication device, comprising:
a sending unit, configured to send an indication to a second multi-link device through one or more links comprising a first link, wherein the indication comprises a start time point and an identifier, the indication indicates the second multi-link device to perform an operation related to a second link at the start time point, and the identifier is an identifier of the second link or an identifier of a band that the second link is on.

9. The communication device according to claim 8, wherein the indication further comprises a reason code, and the reason code indicates the second multi-link device to use the second link or avoid the second link at the start time point based on the reason code.

10. The communication device according to claim 8 or 9, wherein the indication further comprises duration, and the duration indicates duration for which the second multi-link device continuously performs the operation related to the second link.

11. A communication device, comprising:
a receiving unit, configured to receive an indication from a first multi-link device through one or more links comprising a first link, wherein the indication comprises a start time point and an identifier; and
a processing unit, configured to perform an operation related to a second link at the start time point based on the indication, wherein the identifier is an identifier of the second link or an identifier of a band that the second link is on.

12. The communication device according to claim 11, wherein the indication further comprises a reason code, and the reason code indicates to use the second link or avoid the second link at the start time point based on the reason code.

13. The communication device according to claim 12, wherein the processing unit is further configured to:
change an operating band of a radio frequency circuit at the start time point if the reason code indicates to avoid the second link and the communication device is a single radio frequency non-access point multi-link device.

14. The communication device according to any one of claims 11 to 13, wherein the indication further comprises duration, and the duration indicates duration for continuously performing the operation related to the second link.

15. A computer device, comprising a processor and a memory, wherein
the processor is configured to execute instructions stored in the memory, to enable the computer device to perform the method according to any one of claims 1 to 7.

16. A computer-readable storage medium, wherein the computer-readable storage medium stores a computer program, and when the computer program is run on a computer, the computer is enabled to perform the method according to any one of claims 1 to 7.

17. A computer program product, wherein when the computer program product is executed on a computer, the computer performs the method according to any one of claims 1 to 7.
